# EUROPEAN PATENT APPLICATION

(11) **EP 0 683 405 A1**
(43) Date of publication of application: **22.11.1995**
(21) Application number: 95303121.8
(22) Date of filing: 09.05.1995
(51) Int. Cl.: G02B 5/20, G02F 1/1335, B41J 2/04

(54) **Acoustic fabrication of color filters**

(30) Priority: 18.05.1994 US 245322
(71) Applicant: XEROX CORPORATION, Rochester New York 14644 (US)
(72) Inventor: Chuang, Tzu-Chin, Saratoga, California 95070 (US); Lim, Martin, Union City, California 94587 (US); Hadimioglu, Babur B., Mountain View, California 94040 (US); Thompson, Malcolm J., Palo Alto, California 94303 (US)
(74) Representative: Reynolds, Julian David

(57) **Abstract**

A method of fabricating color filters (Fig.1) by acoustically ejecting and depositing droplets (52) of color filter material onto a receptor by the use of focused acoustic energy generated by transducer (60) and focussed by lens (70). Different colors of color filter materials can be deposited adjacent each other so as to form a color filter array.

## Description

This invention relates to color filter fabrication.

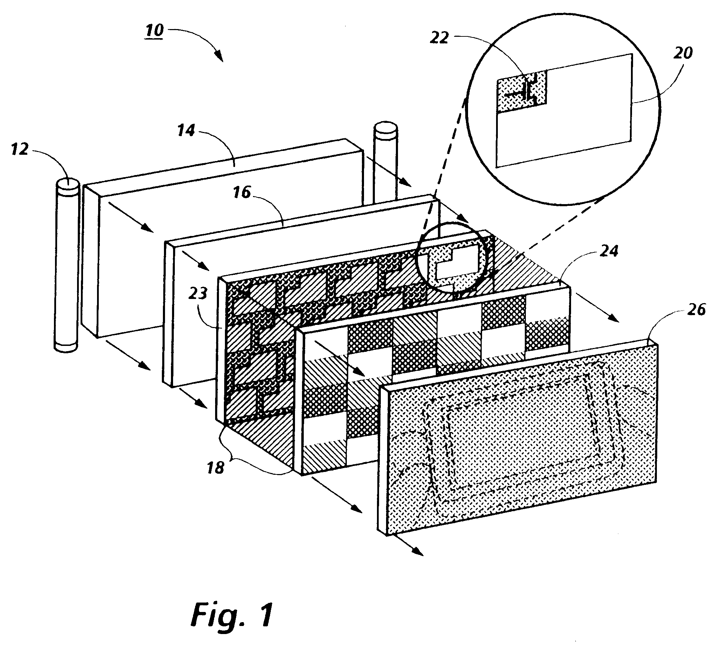

Color liquid crystal displays are useful imaging devices in many applications; for example, computer display screens. Figure 1 illustrates an exemplary color liquid crystal display 10. Fluorescent lamps 12 produce white light which is emitted from a light plate 14. The emitted white light passes through a polarizer 16 which polarizes the white light into a given plane. The polarized white light then illuminates (backlights) a liquid crystal array assembly 18 which includes a large number of addressable active matrix elements 20. Each active matrix element includes one or more transistor switches 22 which selectively apply voltages across a liquid crystal material which is sandwiched between an active matrix plate 23 and a color filter plate 24. If the proper voltage is applied across the liquid crystal, the liquid crystal polarizes the incoming light. Contrary, at another voltage the liquid crystal passes light without polarization.

The light that passes through an active matrix element illuminates an associated color filter element of a color filter array 24. Thus, light passed by the active matrix elements is color filtered by the color filter elements. In most applications, the color filter elements filter the light passed by an active matrix element into one of three primary colors. By proper organization of the various color fiiters and voltages across the active matrix elements, the visual effect of the passed light can appear as any color.

In most high quality liquid crystal displays the area between the color filter elements and over the transistor switches is colored black, thereby forming what is called a black matrix. The black matrix prevents light from passing through the display in regions where there is no voltage control over the liquid crystal. The color filtered light then passes to a second polarizer 26 which interacts with the light selectively polarized by the active matrix elements to form an image.

In the past, one of the most expensive and difficult sections of a color liquid crystal display to fabricate was the color filter array. In high resolution color liquid crystal displays made using prior art techniques, a large part of the cost of producing the display was the fabrication of the color filter array. One reason for the high cost was that in the prior art most color filter arrays were lithographically fabricated. In lithographic fabrication, material of a first color is coated onto the color filter array's substrate. Then, the first coating is lithographically patterned, etched, and cured, leaving color filter elements of the first color in selected locations. The process is then repeated for the other color filter elements. If the color filter array includes a black matrix, the black matrix must also be lithographically formed as above. Finally, a passivation layer is provided to protect the filter elements. Thus, forming a black matrix, three primary colors, and a passivation layer requires several lithographic steps. Since each step of the lithographic process removes most of the deposited material, significant amounts of material is wasted. Further, once lithographically formed, the repair of a defective color filter element is difficult or impossible.

Another problem with lithographic fabrication of color filter arrays is the difficulty of making changes to an existing design. The time and expense of designing new photomasks and processes for several lithography steps severely limits design changes and experimentation. Additionally, since not all materials lend themselves to lithographic fabrication some potentially useful color filter materials cannot be used.

Therefore a new method of fabricating color filter arrays would be useful. Particularly useful would be a low cost method of fabricating color filters arrays. It would be beneficial if that method reduces the amount of material that is wasted, lends itself to the repair of improperly deposited color filter elements, permits the use of color filter materials not suitable for lithography, and enables relatively easy color filter array design changes.

Various printing technologies have been developed for marking recording media. For example, thermal ink jet printing operates by rapidly heating an element to cause ejection of a bubble from a nozzle. Another prior art printing technology is the piezeoelectric ink jet. A piezeoelectric ink jet printer operates by applying an electric voltage across a piezeoelectric element in a liquid. The voltage makes the piezeoelectric element expand, thereby forcing a droplet from a nozzle. It should be noted that nozzle based printers, such as the thermal ink jet and the piezeoelectric ink jet printers, tend to clog. Another problem with nozzle based printers is the difficulty of obtaining large numbers of very small and accurately placed nozzles at reasonable cost. Because of this, nozzle based printers typically use a relatively small print head which moves in a raster fashion across a recording medium. Another problem worth noting is that droplets ejected by nozzles tend to be ejected in trajectories that depend on detailed wetting of the nozzle edges. Non-uniform wetting can lead to misdirected droplets.

While there are many other printer technologies, of importance to the present invention is acoustic printing. In acoustic printing, focused acoustic energy ejects fluid droplets from the free surface of a liquid onto a recording medium. More detailed descriptions of acoustic droplet ejection and acoustic printing in general are found in the following U.S. Patents and in their citations: 4,308,547; 4,697,195; 4,719,476; 4,719,480; 4,748,46; 4,751,529; 4,751,530; 4,751,534; 4,959,674; 5,028,937; 5,041,849; 5,087,931; 5,111,220; 5,121,141; 5,122,818; 5,142,307; and 5,216,451.

Since acoustic printers do not use nozzles they are much less likely to clog. Furthermore, acoustic printers can easily be fabricated using photolithographic techniques to have thousands of densely packed droplet ejectors, each of which ejects very small droplets. This will increase the printing speed. Additionally, the high directionality of acoustically ejected droplets permits accurate control of color filter material placement.

The present invention provides a method of fabricating color filters by depositing droplets of color filter material onto a receptor by the use of focused acoustic energy.

The present invention is a method of fabricating color filters by directly depositing color filter material onto a receptor. Different colors of color filter materials can be deposited to form color filter arrays. Beneficially, the method relates to acoustic printing.

The present inventors recognized that acoustic ejection of small droplets of color filter material, such as polyimide and various acrylics, is possible. They also recognized that since acoustic printers can elect droplets as small as 5 µm in diameter and with tight control of the placement of the ejected droplets on the receptor that acoustic fabrication of color filter arrays is both possible and useful. The inventors also recognized that, because of the minute volumes of acoustically ejected droplets, the repair of some defective color filter elements, such as those with insufficient color filter material depositions, is possible. Furthermore, the inventors recognized that, when compared to lithographic formation of color filter arrays, acoustic deposition of color filter materials reduces material waste and simplifies design changes. The result is significantly lower cost and higher yield.

Other aspects of the present invention will become apparent as the following description proceeds and upon reference to the drawings, in which:
Figure 1 is a simplified, blow-up illustration of a color liquid crystal display;
Figure 2 is an unscaled view of a first embodiment acoustic droplet ejector which is shown ejecting a droplet of color filter material;
Figure 3 is an unscaled view of a second embodiment acoustic droplet ejector, again shown ejecting a droplet of color filter material;
Figure 4 is an unscaled view of an array of acoustic droplet ejectors, each according to Figures 1 or 2, depositing color filter material onto a substrate in a controlled fashion so as to form predefined patterns of color filter material;
Figure 5 is an unscaled cut-away view of an array of acoustic droplet ejectors, each according to Figures 1 or 2, which is organized into separate ejector units and that is capable of depositing different color filter materials onto a substrate;
Figure 6 is an unscaled view of color filter patterns formed by droplets from an array of acoustic ejectors which have been deposited onto active matrix elements; and
Figure 7 is a schematic depiction of a method of applying various color filter materials using rapid drying.

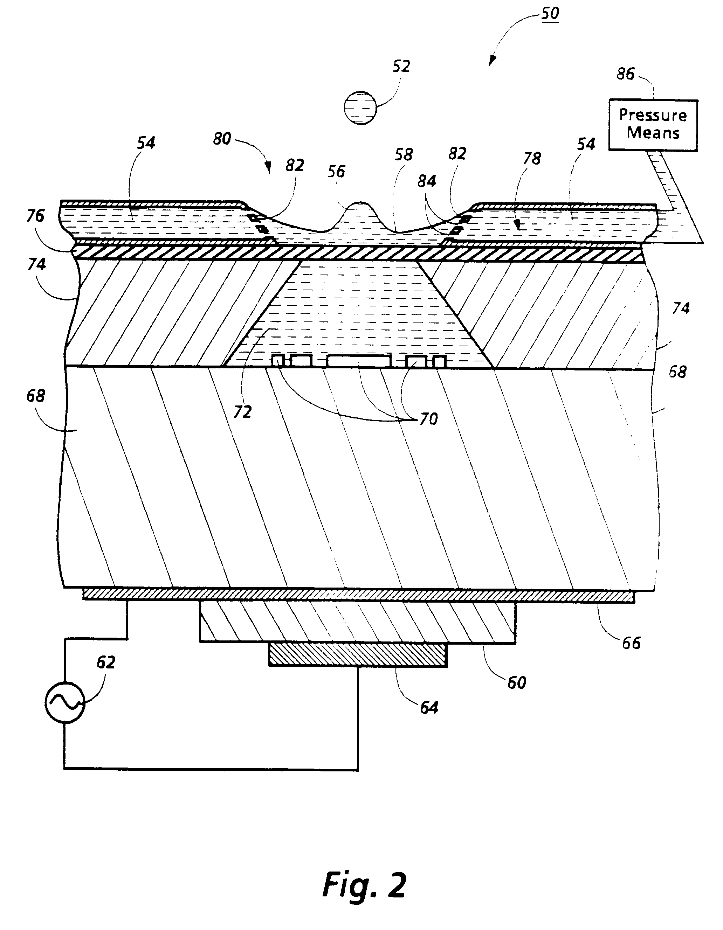

The principles of the present invention will become clearer after study of Figure 2, which shows an exemplary acoustic droplet ejector 50 ejecting a droplet 52 of a common color filter material, polyimide 54. Figure 2 shows the droplet ejector 50 shortly after ejection of a droplet 52 and before the mound 56 on the free surface 58 of the polyimide 54 has relaxed.

The forming of the mound 56 and the subsequent ejection of the droplet 52 is the result of pressure exerted by acoustic forces created by a ZnO transducer 60. To generate the acoustic pressure, RF drive energy is applied to the ZnO transducer 60 from an RF driver source 62 via a bottom electrode 64 and a top electrode 66. The acoustic energy from the transducer passes through a base 68 into an acoustic lens 70. The acoustic lens focuses its received acoustic energy into a small focal area which is at, or is very near, the free surface 58 of the polyimide 54. Provided the energy of the acoustic beam is sufficient and properly focused relative to the free surface of the polyimide, a mound 56 is formed and a droplet 52 is subsequently ejected.

Still referring to Figure 2, the acoustic energy from the acoustic lens 70 passes through a liquid cell 72 filled with a liquid having a relatively low attenuation per unit length. The bottom of the liquid cell 72 is formed by the base 68, the sides of the liquid cell are formed by surfaces of an aperture in a top plate 74, and the top of the liquid cell is sealed by an acoustically thin capping structure 76. By "acoustically thin" it is implied that the thickness of the capping structure is less than the wavelength of the applied acoustic energy.

The droplet ejector 50 further includes a reservoir 78, located over the capping structure 76, which holds polyimide 54. As shown in Figure 2, the reservoir includes an opening 80 defined by sidewalls 82. It should be noted that the opening 80 is axially aligned with the liquid cell 72. The side walls 82 include a plurality of portholes 84 through which the polyimide passes. A pressure means 86 forces polyimide 54 through the portholes 84 so as to create a pool of polyimide having the free surface 58 over the capping structure 76.

The droplet ejector 50 is dimensioned so that the free surface 58 of the polyimide is at, or is very near, the acoustic focal area. Since the capping structure 76 is acoustically thin, the acoustic energy readily passes through the capping structure and into the overlaying polyimide (provided that the capping structure is made from a material, such as mylar, with low acoustic impedance).

A droplet ejector similar to the droplet ejector 50, including the acoustically thin capping structure and reservoir, is described in EP-A-572,241.

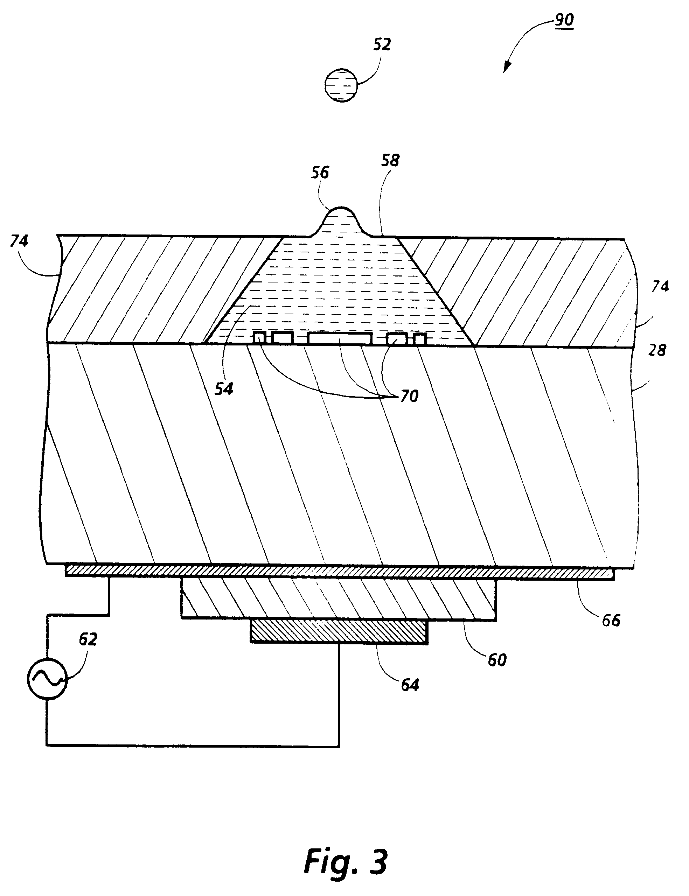

A second embodiment acoustic droplet ejector 90 is illustrated in Figure 3. The droplet ejector 90 does not have a liquid cell 72 sealed by an acoustically thin capping structure 76. Nor does it have the reservoir 78 filled with polyimide 54 nor any of the elements associated with the reservoir (such as the pressure means 86). Rather, the acoustic energy passes from the acoustic lens 70 directly into polyimide 54. However, droplets 52 are still ejected from mounds 56 formed on the free surface 58 of the polyimide.

While the acoustic droplet ejector 90 is conceptually simpler than the acoustic droplet ejector 50, it should be noted that the longer path length through the polyimide of the acoustic droplet ejector 90 might result in excessive acoustic attenuation.

As with acoustic printing droplet ejectors, droplet ejectors for color filter fabrication can be reproduced many, perhaps thousands, of times using photolithographic techniques.

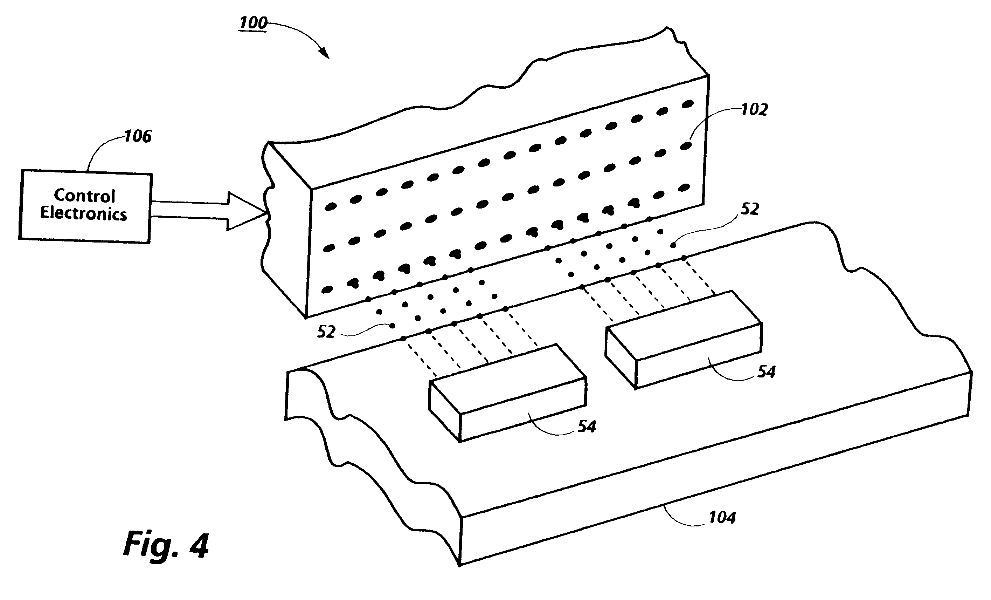

Figure 4 shows an array 100 of individual droplet ejectors 102, some of which are ejecting droplets 52 of polyimide 54 onto a receptor 104 during fabrication of a color filter array. Figure 4 illustrates a useful aspect of acoustic fabrication: controlled patterning. As in acoustic printing, individual ones or groups of the droplet ejectors 102 can be controlled by control electronics 106 to deposit a color filter material in a predetermined pattern on the receptor 104. The control electronics is similar or identical to that used in acoustic printing.

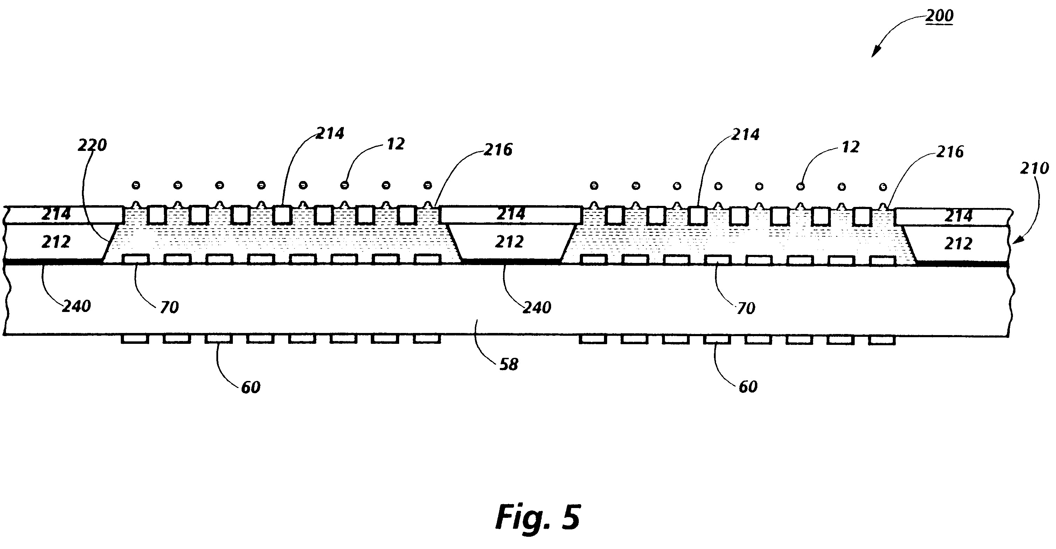

While color filter arrays could be fabricated by ejecting material from physically separated arrays, each of which deposits different color filter elements, in practice color filter arrays may beneficially be fabricated using a single acoustic deposition structure with multiple ejector units. By "ejector unit" it is meant a structure capable of ejecting a selected material from an associated chamber which is either the only chamber, or is one that is isolated from the other chambers. Since the array 100 (Figure 4) is only described as ejecting a material, the array 100 implicitly represents one ejector unit. In contrast, Figure 5 shows a cross-sectional view of an array 200 of droplet ejectors capable of ejecting two different colors of materials, the materials 206 and 208 from two chambers. This is accomplished by fabricating two individual ejector units, each of which ejects only one color, in a single device.

The array 200 of Figure 5 includes a single base 58, but many transducers 60 and acoustic lenses 70. Over the base 58 is plate 210 having walls 212 which define the channels. As each channel holds a different color of color filter material, each channel forms part of a chamber and thus represents an ejector unit. Over the plate and color filter material is a capping structure 214 which includes a plurality of openings 216 in the capping structure which align with the acoustic lenses 70. The openings allow ejection of droplets 12 from the free surface of the color filter material within the openings 216. In operation, the various transducers are driven in a controlled fashion to output acoustic energy which ejects droplets through the openings 216. By controlling droplet ejection, different colors of color filter elements can be fabricated on a receptor by a single device. Of course, the two ejection unit of Figure 5 is readily expanded to include three or more ejection units. A three ejection unit structure which ejects three primary colors is particularly advantageous.

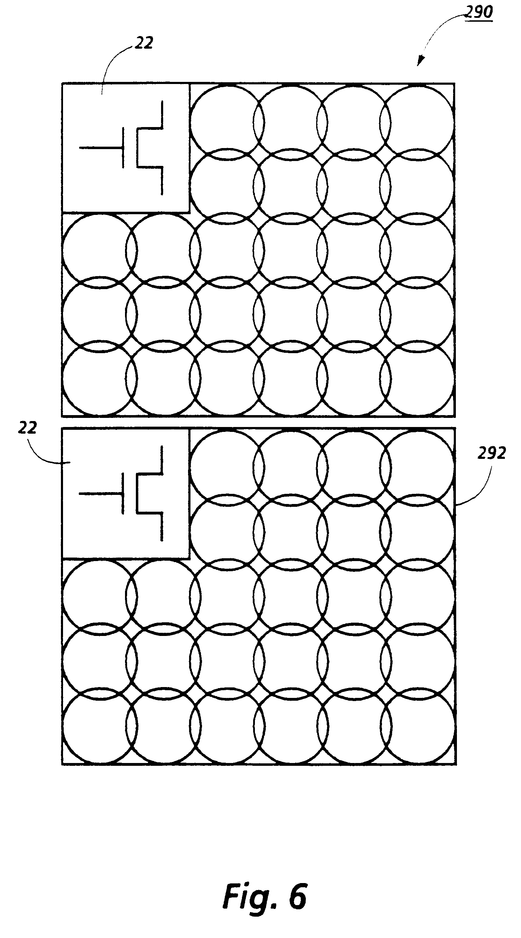

The foregoing has described the acoustic fabrication color filter elements without specifying the receptor. Traditionally, and as shown in Figure 1, the receptor is a separate plate dedicated to the color filter array. One reason for the separate color filter plate was the incompatibility of fabricating the color filter array with the fabrication of the other sections of the liquid crystal display. Acoustic fabrication of color filter elements can be performed directly over the active matrix elements. Figure 6 shows an example of color filter material deposited directly on an active matrix element 290. Direct deposition reduces the problems of aligning the active matrix elements with the color filter array and reduces costs by eliminating patterning on a second plate. As described above, it is beneficial to have different colors of color filters in close proximity. Thus, in Figure 6, the lower active matrix element 292 is covered by a deposition of another color of color filter material.

As indicated earlier, acoustic deposition enables low cost, high yield fabrication of color filters. Because acoustic droplet arrays conceivably could be fabricated as wide as the receptor, a single acoustic array could deposit color filter material in one pass of the receptor over the acoustic array. Alternatively, if a smaller acoustic array is used it could be scanned in two dimensions over the receptor. Because of the high accuracy required, a precision carriage may be required.

Since multiple colors of color filters are usually required, multiple ejection units in a single "printhead" could be used. Such multiple ejection units are described in United States Patent Application 08/245,323, a copy of which was filed with the present application. However, because materials used to fabricate color filters may take a long time to naturally (air) dry, simultaneous depositions of color filter materials will tend to bleed together. But, because of the importance of accurate registration of color filters, depositions in a single pass is beneficial.

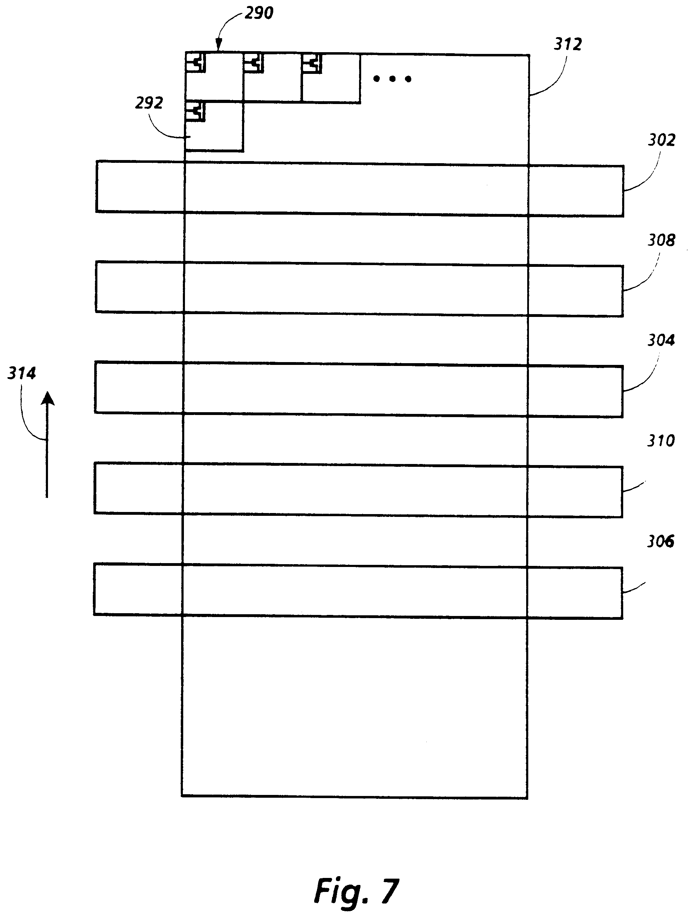

Figure 7 schematically illustrates a method of depositing all color filter materials in a single pass without excessive bleeding. The technique is based upon using a deposition unit comprised of a red acoustic ejector array 302, a blue acoustic ejector array 304, a green acoustic ejector array 306, a first rapid thermal drying unit 308, and a second rapid thermal drying unit 310. As shown in Figure 7, the first rapid thermal drying unit 308 is located between the red acoustic ejector array 302 and the blue acoustic ejector array 304; the second rapid thermal drying unit 310 is located between the blue acoustic ejector array 304 and the green acoustic ejector array 306.

In operation, a receptor 312 is moved in a direction 314. Green filter material is deposited first. As the green color filter material moves past the second rapid thermal drying unit 310, the green filter material is rapidly dried. When the dry green color filter material passes under the blue acoustic ejector array 304, blue color filter material is deposited. That blue material is subsequently dried by the first rapid thermal drying unit 308. Finally, red color filter material is deposited by the red acoustic ejector array 302. That red color filter material may then be rapidly dried (say by reversing direction or by a third drying unit) or may be allowed to air dry.

## Claims

1. A method of fabricating color filters by depositing droplets of color filter material onto a receptor by the use of focused acoustic energy.

2. The method of claim 1, wherein said receptor includes active matrix elements.

3. The method of claim 1 or 2 wherein a plurality of different colors of color filter materials are deposited.

4. The method of claim 3 wherein:
a first color of color filter material is deposited in one area of the receptor;
said first color of color filter material is dried; and
a second color of color filter material is deposited adjacent said dried first color of color filter material.
